# EUROPEAN PATENT SPECIFICATION

(11) **EP 0 731 890 B1**
(45) Date of publication and mention of the grant of the patent: **20.08.1997**
(21) Application number: 95903029.7
(22) Date of filing: 02.12.1994
(51) Int. Cl.: F16L 3/12

(54) **PIPE FASTENING CLIP**
ROHRHALTEKLEMME
CLIP DE MONTAGE POUR TUYAUX

(30) Priority: 02.12.1993 NL 9302100
(43) Date of publication of application: 18.09.1996
(73) Proprietor: J. van Walraven B.V., NL-3641 RK Mijdrecht (NL)
(72) Inventor: van Walraven, Jan, NL-3641 GP Mijdrecht (NL)
(74) Representative: Boelsma, Gerben Harm, Ir.
(86) International application number: NL9400305
(87) International publication number: WO9515457

(56) References cited:
- DE-U- 9 103 296
- US-A- 4 442 994
- US-A- 4 564 163

## Description

The invention relates to a pipe fastening clip for attachment to a wall, comprising a split ring-shaped clip body provided with flanges and with a screw for clamping said flanges together, wherein one flange is adapted to function as a nut and is hingedly connected to the clip body along a preferential bending line, While the second flange is provided with a slot that merges into the terminal edge of said flange, in such a way, that, when closing the clip body around a pipe to be fastened - whereby the two flanges are moved towards one another - the clamping screw threaded into said first flange will - while causing said first flange to turn along - initially tilt outwardly due to its head engaging said second flange and then - while allowing said first flange to turn back - enter with its shaft into the slot of the second flange.

Such a pipe fastening clip is disclosed in EP-0 344 862.

With this well-known fastening clip the clip body is made of a strip of spring steel, whereby the first flange is provided with a nut welded to it, whereas the preferential bending line forming the hinge connection between said flange and the clip body is obtained by cuts which extend inwardly from opposite edges.

The invention aims at providing a pipe fastening body which is suitable for universal use and for relatively cheap mass production, whereby certain manufacturing steps such as the welding of nuts on said first flange, may be omitted.

According to the invention this aim is achieved in that the clip body is made of plastic material and comprises two substantially inflexible halves, which are connected along a hinge line at a location diametrically opposite said flanges, said first flange having a column-shaped protuberance extending from the dividing plane between the two halves in a direction turned away from the second flange, said protuberance serving to receive the e.g. self-tapping type fastening screw, and said first flange being connected to the respective clip body half by means of a bridging piece of reduced thickness forming said preferential line and positioned at a distance from said dividing plane in a direction turned away from said second flange.

The clip body of such a pipe clip may be manufactured by injection molding in a rather simple manner.

The column-shaped protuberance of the first flange and the offset position of said flange with the bridging piece connecting the latter with the respective clip body half relative to the dividing plane between the two clip body halves ensure, on one hand, a reliable hold of the clamping screw in said first flange and offer, on the other hand, the possibility of a tilting angle which is large enough to aloow the clip body halves to be closed in case of a premounted clamping screw. The offset position of the connecting bridging piece between said first flange and the respective clip body half contribute to a compact and rigid embracing of the pipe to be fastened by the clip body.

According to a further feature of the invention the arcuate parts of the two clip body halves have their edges bent radially inwardly and a filling of a softer type of plastic is provided within the space between said opposite edges with each pipe clip body half.

Said softer type of plastic filling may serve as a lining around the pipe to be fastened and may be provided through well-known techniques during the injection molding process of the clip body.

It is to be noted that US-A-4,442,994 discloses a pipe fastening clip for attachment to a wall, comprising a split ring-shaped clip body of plastic material, provided with flanges that may be clamped together by a fastening element. The clip body comprises two substantially inflexible halves which are connected along a hinge line at a location substantially diametrically opposite the flanges. As distinguished from the clip according to the present invention both of the flanges are rigidly connected with the respective clip halves and adapted to be traversed by the fastening member in the form of a nail that also serves to fasten the clip body to the supporting wall. Consequently this well-known clip has to be first applied to and closed around the pipe to be fastened before fastening to the wall can take place.

Further advantages of the pipe clip according to the invention will be herinafter explained with reference to the drawing in which a preferred embodiment of the pipe is shown.
Fig. 1 is an end view of the pipe clip according to the invention, in the closed position and with the filling piece in the outward and imperative position;
fig. 2 is an end view as shown in fig. 1, but now with the filling piece turned inwardly into the operative position;
fig. 3 is a plan view of the pipe clip according to fig. 1;
fig. 4 is a side view of the clip around a pipe;
fig. 5 is a cross-sectional view on an enlarged scale of the pipe clip according to fig. 1, along the line V-V in fig. 6, in the opened position and with the lining omitted;
fig. 6 is a plan view of the pipe clip in the opened position according to fig. 5;
fig. 7 is a cross-sectional view along the line VII-VII in fig. 6;
fig. 8 is a cross-sectional view of the lining for the pipe clip of fig. 6 and 7 and
fig. 9 is a plan view of the lining of fig. 8.

The pipe clip shown in the drawing comprises two halves A and B of a suitable plastic, such as polyethylene or polypropylene. The clip halves A and B are interconnected by a hinge C and are each provided with a flange D and E respectively positioned diametrically opposite the hinge connection C. Furthermore the clip half A is provided with a base F for fastening the clip on a horizontal or vertical wall.

The clip half A substantially consists of a trough-shaped shell body having side walls 1 and 2 which converge from the dividing plane between the two shell halves towards the base F, and two parallel end walls 3 and 4 dividing a circular opening. The bottom 5 of the trough-like shell body has a dome-shaped projection 6, which serves as a receiving space for the end of a fastening screw, by means of which the pipe clip may be attached to a supporting wall. The upper face of the dome-shaped projection 6 touches the arc of said circular opening.

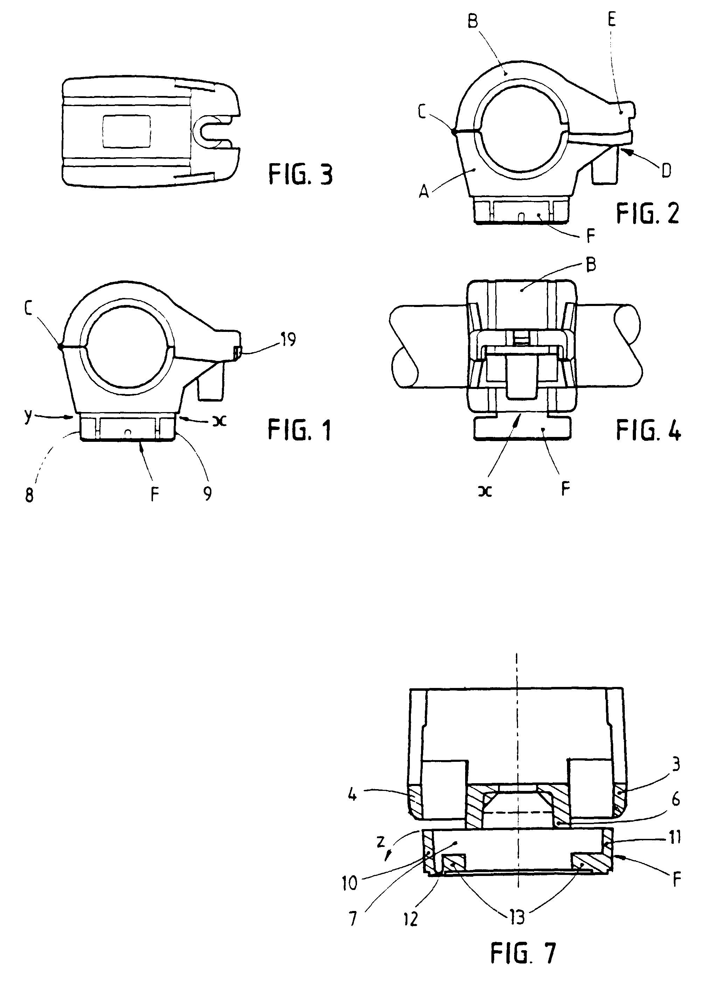

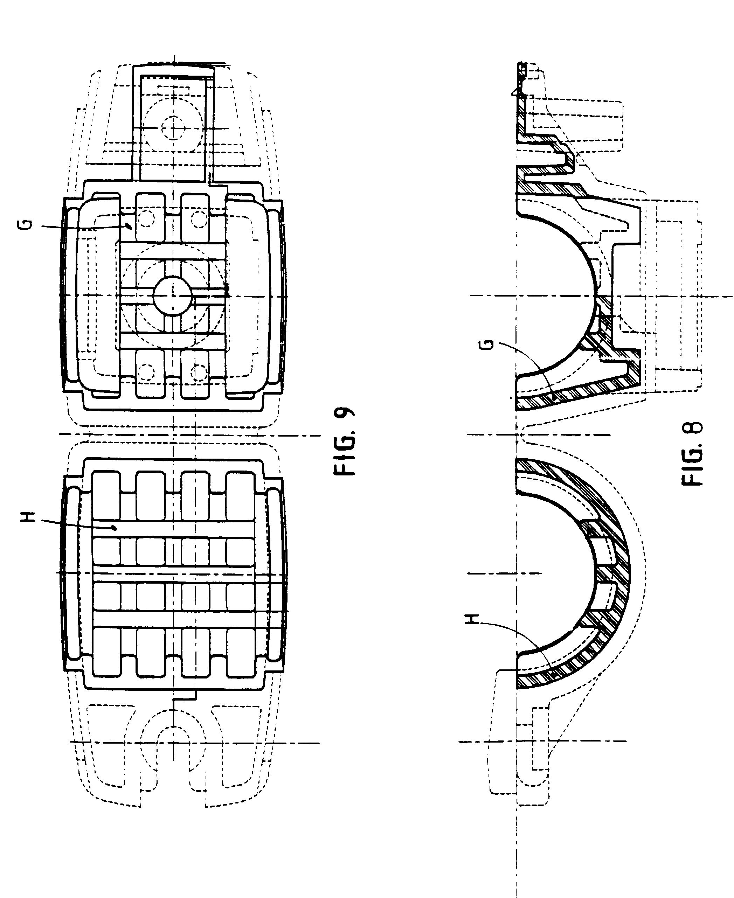

The base F devines a downwardly (i.e. in a direction turned away from the dividing plane between the two clip halves A and B) opening receiving space 7 for a fastening nut (not shown); two opposite walls 8 and 9 of said receiving space merge at x and y respectively (vide in particular fig. 1) into the walls 1 and 2 of the trough-shaped body of the clip half A. The wall 10 of the other two opposite walls 10 and 11 (vide fig. 7) is connected with the bottom 13 of the receiving space 7 through a thin connecting strip 12, so that this wall may be turned down in the direction of arrow Z in order to allow a fastening nut to be slided from the aside into the space 7.

The flange D of the clip halve A substantially consists of an angle element 14 with a flange portion 14a positioned in the dividing plane between the two clip halves A and B and a flange portion 14b extending from said deviding plane. In the dihedral angle of the flange element 14 there is provided a column-shaped portion 15 provided with a preformed hole, said portion extending from the flange portion 14a downwardly and merging at one side into the upright flange portion 14b. The flange element 14 is connected, with the end turned away from the dividing plane of said flange portion 14b - to the side wall 2 of the trough-shaped body of the respective clip half A through a connecting bridge strip 16. The bridging strip 16 has a reduced thickness to form a hinge connection between the trough-shaped body and the flange element 14, 15. The hinging connecting strip 16 is located about halfway the height of the column-shaped portion 15.

On either side of the flange element 14 - at the level of the lying flange portion 14a - there are provided arm-shaped flange portions 17 and 18 respectively, which extend from the upper part of the wall 2 outwardly and slightly converge relative to one another.

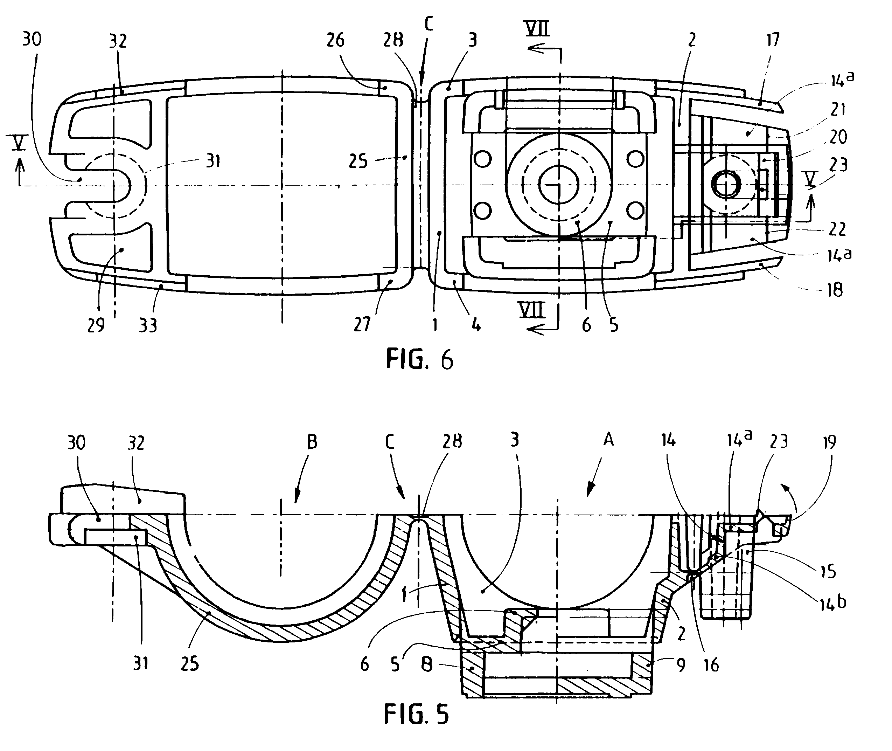

The lying flange portion 14a merges at its outer end into a special edge portion 19, which is hingedly connected to the flange portion 14a through two transition portions 21 and 22 of reduced thickness on both sides of an opening 20. The edge portion 19 may be swung over about the hinge line 21, 22 in the arrow direction (fig. 5) from the position shown in fig. 5 and 6 to form a thickening (embossment) of the lying flange portion 14a. The edge portion 19 may thus function as a filling piece or spacing piece, which is disclosed in GM-90 02 878.3. At the edge of the opening 20 turned away from the edge portion 19 there is provided a hook 23 to hold the edge portion 19 in its operative, inwardly swung position against the spring action of the hinge 21, 22.

The clip half B substantially consists of a semi-cylindrical shell 25 having radially inwardly extending edges 26 and 27. The shell body 25 is connected to the wall 1 of the trough-shaped body of the clip half A through a thin connecting strip 28 that constitutes the hinge C. The connecting strip 28 which is tensionless in the opened position according to fig. 5 and 6, deforms to a semi-cylindrical connecting bridge between the clip halves A and B when closing the clip.

The shell body 25 of the clip half B is also provided with a flange 29 having an outwardly opening slot 30 and a recess 31 for receiving the head of a fastening screw (not shown). Wings 32 and 33 respectively are provided at the two side edges of the flange 29 and extend from the flange surface in an upright position; these flanges converge relative to one another outwardly and will - when closing the clip - engage the outer side of the fixed flange arms 17 and 18 of the clip half A.

Fig. 8 and 9 represent a lining of a suitable thermoplastic elastomer, to provide for the desired damping of the sound transfer between clip and pipe.

The contours of the clip halves A and B are represented by dash lines. As shown in fig. 8 and 9, there are two separate lining parts G and H, which are adapted to be received in respective recesses in the clip halves A and B.

## Claims

1. A pipe fastening clip for attachment to a wall, comprising a split ring-shaped clip body (A, B) provided with flanges (D, E) and with a screw for clamping said flanges together, wherein one flange (D) is adapted to function as a nut and is hingedly connected to the clip body along a preferential bending line (16), while the second flange (E) is provided with a slot (30) that merges into the terminal edge of said flange, in such a way, that, when closing the clip body (A, B) around a pipe to be fastened, whereby the two flanges (D, E) are moved towards one another, the clamping screw threaded into said first flange (D) will, while causing said first flange (D) to turn along, initially tilt outwardly due to its head engaging said second flange (E) and then, while allowing said first flange (D) to turn back, enter with its shaft into the slot (30) of the second flange (E), characterized in that the clip body (A, B) is made of plastic material and comprises two substantially inflexible halves (A, B), which are connected along a hinge line at a location (C) diametrically opposite said flanges (D, E), said first flange having a column-shaped protuberance (15) extending from the dividing plane between the two halves (A, B) in a direction turned away from the second flange (E), said protuberance (15) serving to receive the e.g. self-tapping type fastening screw, and said first flange (D) being connected to the respective clip body half (A) by means of a bridging piece (16) of reduced thickness forming said preferential line and positioned at a distance from said dividing plane in a direction turned away from said second flange (E).

2. A pipe fastening clip according to claim 1, characterized in that the column-shaped protuberance (15) is making part of an angle flange element (14), the lying flange portion (14a) of which is located in the dividing plane between the two clip halves (A, B), while the terminal edge of the upright flange portion (14b) is connected to the respective clip body half (A) through said bridging strip (16) of reduced thickness.

3. A pipe fastening clip according to claim 2, characterized in that the lying flange portion (14a) of the angle flange element (14) extends at both sides of the column-shaped protuberance (15) and that the upright flange portion (14b) of the flange element (14) substantially covers half the height of the column-shaped protuberance (15).

4. A pipe fastening clip according to claims 1-3, characterized by a guiding wing (17, 18) extending from the respective clip body half (B) outwardly and provided on either side of the hinging first flange (D), and a further guiding wing (32, 33) on either side of the fixed second flange (E), the latter engaging in the closed position of the clip the outer side of the wings (17, 18) on either side of said first flange (D).

5. A pipe fastening clip according to claims 1-4, characterized in that the two clip body halves (A, B) are provided with radially inwardly directed edges (3, 4; 26, 27) defining the seat for the pipe to be fastened, a lining means (G; H) of a softer plastic being provided between each two opposite edges (3, 4; 26, 27).

6. A pipe fastening clip according to claims 1-5, characterized in that the column-shaped protuberance (15) and/or the lying flange portion (14a) of the angle flange element (14) extending on either side thereof is or are outwardly extended by a filling piece (19) which may be swung over along a hinge line area 21, 22) of reduced thickness so as to be inserted as a filling piece between the two flanges (D, E).

7. A pipe fastening clip according to claims 1-6, characterized in that one (A) of the clip halves (A, B) is provided with an integrally formed base (F), into which a fastening nut may be laterally inserted.

## Patentansprüche

1. Rohrhalteklemme zur Befestigung an einer Wand, versehen mit einem gespaltenen ringförmigen Haltekörper (A, B) mit Flanschen (D, E) und einer Schraube zum Aufeinanderklemmen der Flansche, wobei der eine Flansch (D) als Mutter arbeiten kann und gemäss einer Vorzugsbiegelinie (16) gelenkig mit dem Haltekörper verbunden ist, während der zweite Flansch (E) mit einem in die Endkante dieses Flansches mündenden Schlitz versehen ist, in der Weise, dass beim Schliessen des Haltekörpers (A, B) um das zu befestigende Rohr - wobei die beiden Flansche (D, E) zueinander bewegt werden - die im ersten Flansch (D) eingeschraubte Schraube zunächst, infolge des Anschlagens seines Kopfes gegen den zweiten Flansch (E), unter Mitdrehen des ersten Flansches (D) nach aussen kippt und darauf, unter Zurückdrehen des ersten Flansches (D), mit seinem Schaft in den Schlitz (30) im zweiten Flansch (E) hineintritt, dadurch gekennzeichnet, dass der Haltekörper (A, B) aus Kunststoff hergestellt ist und zwei wesentlich unbiegsamen Hälften (A, B) aufweist, welche gemäss einer Biegelinie an einer den Flanschen (D, E) diametral gegenüberliegenden Stelle (C) miteinander verbunden sind, wobei der erste Flansch einen sich von der Teilebene zwischen den beiden Hälften (A, B) in einer vom zweiten Flansch (E) abgekehrten Richtung erstreckenden säulenförmigen Aufsatz (15) aufweist, welcher Aufsatz (15) zum Aufnehmen einer z.B. selbstscheidenden Befestigungsschraube dient, und wobei der erste Flansch (D) mit der betreffenden Haltekörperhälfte (A) verbunden ist mittels eines Brückenteils (16) reduzierter Stärke, welcher die genannte Vorzugsbiegelinie bildet und, in einer vom zweiten Flansch (E) abgekehrten Richtung betrachtet, in einem Abstand von der Teilebene liegt.

2. Rohrhalteklemme nach Anspruch 1, dadurch gekennzeichnet, dass der säulenförmige Aufsatz (15) Bestandteil (15) eines Winkelflanschteiles (14) ist, dessen liegender Flanschabschnitt (14a) in der Teilebene zwischen den beiden Haltekörperhälften (A, B) liegt, während die Endkante des aufstehenden Flanschabschnittes (14b) durch einen Verbindungsstreifen (16) reduzierter Stärke mit der betreffenden Haltekörperhälfte (A) verbunden ist.

3. Rohrhalteklemme nach Anspruch 2, dadurch gekennzeichnet, dass der liegende Flanschabschnitt (14a) des Winkelflanschteils (14) sich an beiden Seiten des säulenförmigen Aufsatzes (15) erstreckt und dass der aufstehende Flanschabschnitt (14b) des Winkelflanschteils (14) etwa die halbe Höhe des säulenförmigen Aufsatzes (15) bestreicht.

4. Rohrhalteklemme nach Ansprüchen 1-3, gekennzeichnet durch einen sich von der betreffenden Haltekörperhälfte (B) nach aussen erstreckenden Führungsflügel an jeder Seite des gelenkigen ersten Flansches (D), so wie einen weiteren Führungsflügel (32, 33) an jeder Seite des unbeweglichen zweiten Flansches (E), wobei der letztere in der geschlossen Position der Halteklemme gegen die Aussenseite der Flügel (17, 18) an jeder Seite des ersten Flansches (D) anliegt.

5. Rohrhalteklemme nach Ansprüchen 1-4, dadurch gekennzeichnet, dass die beiden Haltekörperhälften (A, B) radial nach innen gerichtete Ränder (3, 4; 26, 27) aufweisen, welche den Sitz für das zu befestigende Rohr bilden.

6. Rohrhalteklemme nach Ansprüchen 1-5, dadurch gekennzeichnet, dass der säulenförmige Aufsatz (15) und/oder der liegende Flanschabschnitt (14a) des sich an beiden Seiten desselben erstreckenden Winkelflanschteils (14) durch ein Füllstück (19) nach aussen verlängert ist (sind), welches um einen Biegeliniebereich (21, 22) reduzierter Stärke umgelegt werden kann und dabei wie ein Füllstück zwischen den beiden Flanschen (D, E) gelangt.

7. Rohrhalteklemme nach Ansprüchen 1-6, dadurch gekennzeichnet, dass eine (A) der Haltekörperhälften (A, B) mit einem angeformten Fuss (F) versehen ist, in den eine Befestigungsnut von der Seite her hineinsteckbar ist.

## Revendications

1. Collier d'attache de tuyau se fixant à une paroi, comprenant un corps annulaire divisé (A, B) pourvu de brides (D, E) et d'une vis pour le serrage ensemble de ces brides, une bride (D) étant faite pour remplir la fonction d'écrou et jointe par une charnière au corps le long d'une ligne préférentielle de pliage (16), tandis que la deuxième bride (E) est pourvue d'une fente (30) qui se fond dans son bord terminal de façon telle que lorsqu'on ferme le corps (A, B) autour d'un tuyau à attacher en rapprochant les deux brides (D, E), la vis de serrage vissée dans la première bride (D), en faisant tourner celle-ci, bascule initialement vers l'extérieur du fait que sa tête vient en prise avec la deuxième bride (E) et ensuite, en permettant à la première bride (D) de revenir en arrière, entre par sa tige dans la fente (30) de la deuxième bride (E), caractérisé par le fait que son corps (A, B) est en matière plastique et comprend deux moitiés pratiquement non flexibles (A, B) qui sont jointes le long d'une ligne charnière à un endroit (C) diamétralement opposé aux brides (D, E), la première bride ayant une protubérance en forme de colonne (15) qui s'étend du plan de division entre les deux moitiés (A, B) dans la direction opposée à la deuxième bride (E), cette protubérance (15) étant destinée à recevoir la vis de fixation par exemple autotaraudeuse, et la première bride (D) étant jointe au demi-corps associé (A) au moyen d'une pièce de pontage (16) d'épaisseur réduite qui forme la ligne préférentielle et est placée à une certaine distance du plan de division dans la direction opposée à la deuxième bride (E).

2. Collier d'attache de tuyau selon la revendication 1, caractérisé par le fait que la protubérance en forme de colonne (15) fait partie d'un élément de bride en équerre (14) dont l'aile horizontale (14a) est située dans le plan de division entre les deux demi-colliers (A, B), tandis que le bord terminal de son aile verticale (14b) est joint au demi-corps de collier associé (A) par la bande de pontage (16) d'épaisseur réduite.

3. Collier d'attache de tuyau selon la revendication 2, caractérisé par le fait que l'aile horizontale (14a) de l'élément de bride en équerre (14) s'étend des deux côtés de la protubérance en forme de colonne (15) et que l'aile verticale (14b) de l'élément en équerre (14) couvre sensiblement la moitié de la hauteur de la protubérance en forme de colonne (15).

4. Collier d'attache de tuyau selon l'une des revendications 1 à 3, caractérisé par une aile de guidage (17, 18) qui s'étend vers l'extérieur à partir du demi-corps de collier associé (B) et est prévue de chaque côté de la première bride à charnière (D), et une autre aile de guidage (32, 33) de chaque côté de la deuxième bride fixe (E), cette aile, lorsque le collier est fermé, étant en prise avec le côté extérieur de l'aile associée (17, 18) de la première bride (D).

5. Collier d'attache de tuyau selon l'une des revendications 1 à 4, caractérisé par le fait que les deux demi-corps de collier (A, B) sont pourvus de bords dirigés radialement vers l'intérieur (3, 4 ; 26, 27) qui forment le siège pour le tuyau à attacher, un moyen de garniture (G ; H) en plastique plus souple étant prévu entre les bords opposés (3, 4 ; 26, 27).

6. Collier d'attache de tuyau selon l'une des revendications 1 à 5, caractérisé par le fait que la protubérance en forme de colonne (15) et/ou l'aile horizontale (14a) de l'élément de bride en équerre (14) s'étendant de chaque côté de celle-ci est ou sont prolongée(s) vers l'extérieur par une pièce de remplissage (19) qui peut être relevée autour d'une zone ligne charnière (21, 22) d'épaisseur réduite pour être introduite comme pièce de remplissage entre les deux brides (D, E).

7. Collier d'attache de tuyau selon l'une des revendications 1 à 6, caractérisé par le fait qu'un (A) des deux demi-colliers (A, B) est pourvu d'une base (F) faisant corps avec lui dans laquelle peut être introduit latéralement un écrou de fixation.
